# EUROPEAN PATENT SPECIFICATION

(11) **EP 1 215 403 B1**
(45) Date of publication and mention of the grant of the patent: **31.05.2006**
(21) Application number: 01128588.9
(22) Date of filing: 30.11.2001
(51) Int. Cl.: F16B 13/14, F16B 11/00

(54) **Method for providing a dowel in a fibre board and corresponding fibre board**
Verfahren zum Einsetzen eines Dübels in eine Faserplatte sowie eine solche Faserplatte
Procédé de montage d'une cheville dans un panneau en fibres et un tel panneau en fibres

(30) Priority: 12.12.2000 DK 200001856
(43) Date of publication of application: 19.06.2002
(73) Proprietor: Alebco Corporation, 7280 Sdr. Felding (DK)
(72) Inventor: Christensen, Asbjörn Tranekaer, 7323 Give (DK)
(74) Representative: Nielsen, Leif

(56) References cited:
- WO-A-98/30853
- US-A- 4 370 372
- US-A- 4 729 705
- US-A- 4 964 772
- US-A- 5 733 083

## Description

The invention concerns a method for mounting a fastening device for a screw for securing another item, such as a plate section for a hinge, a lock case or the like in a blind hole in a fibre board comprising fibres of wood, flax, straw or the like, which are compressed and bonded together to a board which has a stable shape and which is provided with a coating, e.g. comprising veneer, film, paint, or the like, on its surfaces.

Furthermore, the present invention concerns a pre-fabricated fibre board comprising a fastener ready to receive a screw for securing another item, such as a plate section for a hinge, a lock case or the like, in a blind hole in a fibre board comprising fibres of wood, flax, straw or the like, which are compressed and bonded together to a board having a stable shape and being provided with a coating on its surfaces.

A method for inserting a fastener in a lightweight panel is know from document US-A-4 729 705.

Within recent years, smooth boards for use in furniture, doors and other building structures have been made as sandwich constructions consisting of two thin sheets and a supporting frame with a core, e.g. in the form of honeycomb cardboard or the like.

This construction is expensive and complicated and implies risk of weaknesses in the form of tensions and cracks between frame and core.

Even if the fibre boards are having numerous advantageous properties as core element, they have had a relatively limited extension to natural fibre boards or building boards where a certain weight has to be carried in the board. This weight may be the weight of the board itself as in the case of doors. Alternatively, the case may be carrying the weight of objects suspended on the board, which is the case in connection with hooks mounted on a building board.

When a screw hitherto has been screwed into a fibre board, often there has been a risk that the screw is pulled out at some time due to the load on the screw and due to the porous structure in the fibre board.

It is the purpose of the invention to indicate a novel technique for establishing a fastener for use in fibre boards so that it is possible pre-fabricate the fibre boards in such a way that they are ready to receive a screw for fastening an item on the fibre board in a quick and simple way while at the same time there is achieved a great strength and little risk that the screw is released from the fibre board in a structure which may consist of an example in the shape of a natural fibre board.

This is achieved by the method according to claim 1 and the fibre board according to claim 10, respectively.

By applying the dowel, which fits in the hole in the fibre board, in a press fit, the bonding agent filled into the hole will be pressed out into and partly fill up the cavities between the fibres surrounding the hole. At the same time, the slot between the dowel and the hole is filled up with bonding agent which also fills up the grooves in the dowel. With this construction, an increased strength is achieved due to the bonding together of the fibres around the hole simultaneously with there is established a bonding agent body extending from the wood fibres through the boundary surface and into the grooves in the surface of the dowel.

A surprisingly great tensile strength has appeared by this construction. However, it has also surprisingly appeared that grooves extending in the longitudinal direction of the dowel does not give approximately the same tensile strength as grooves extending in the peripheral direction of the dowel.

The dowel will preferably be cylindric, and the grooves will be formed in a plane perpendicular to the longitudinal direction of the dowel. The grooves may have any cross-section but preferably have approximately semi-circular cross-section. Furthermore, it has appeared advantageous that the grooves constitute between half and one quarter, preferably one third of the surface of the dowel with the purpose of achieving maximum resistance against extraction of the dowel.

By practical experiments it has appeared possible to resist extraction of the dowel by exerting a tensile force up to 500 kg.

When bonding agent has been filled into the hole, this occurs preferably by means of a nozzle having several openings which extend over the depth of the hole. Hereby it is ensured that before inserting the dowel, bonding agent has not only been provided at the bottom of the hole but also an even layer of bonding agent over the whole depth of the hole.

Preferably, there is applied a bonding agent of polyvinyl acetate dispersion type having a viscosity between 10,000 and 20,000, preferably about 15,000 mPa*s. Additionally, there is used an amount of bonding agent so that the cavities in the fibre board are filled up in an area of 4 - 20 mm and preferably 5 - 8 out into the fibre board. Thus a part bonding agent impregnation and bonding together of fibre material is achieved when the dowel is inserted. The used dowel is preferably of wood, but may alternatively be made of other material, as for instance metal or plastic materials.

Particularly with boards to be used for doors, the coating will include an edge of film or wood strip ensuring that in a porous edge a recess may be provided, preferably by milling, with a profile corresponding to the shape of the plate section of the hinge or the lock case. By such a solution, an edge strip on the fibre board is unnecessary. If an edge strip is used, by milling such a recess in the edge strip there is achieved a secure guiding and easy mounting of hinges and lock cases.

When a milling is performed, the upper side of the dowel will be flush with the bottom of the recess so that a plane support surface for the plate section appears.

The fibre board may be made of different kinds of cellulose fibres, straw fibres, wood fibres, flax fibres, etc. In an advantageous embodiment, the fibre board comprises flax fibres and usually has a density of between 350 and 500, preferably between 440 and 470 kg/m³. With such density there is achieved a natural fibre board which appears genuine and at the same time provides the strength needed for avoiding holes by impact action on the laminated side surfaces. Such a fibre board is particularly suited as board in a door as it will be more fireproof and more soundproof than traditional sandwich doors.

In a specific embodiment of the fastener for use in a door with a thickness of 38 mm thick, a 60 mm long wooden dowel with a diameter of 16 mm is used. There are provided 9 annular grooves with a semicircular cross-section with a radius of 1 mm, and the bonding agent is a polyvinyl acetate glue forming a tough elastic glue joint which meets the standard EN 204 D3. The bonding agent is fluid and has a viscosity of about 15,000 mPa*s, brookfield LVT, spindle 4,6 rpm, 25°C. It is a glue which is drying relatively quickly at room temperature. Thus it will be possible to perform bonding in process equipment and let the glue harden at a subsequent transport storage from the process line where the bonding agent and the dowel are placed in the hole. Thus there is no requirement for any heat supply to achieve the necessary strength/hardening in the bonding agent.

Even though a specific example with a fibre board having a thickness of 38 mm is mentioned above, it is possible to use thicknesses between 30 and 50 mm for dowels with the same dimensions.

Also, it is preferred that the dowel comprises a central boring for receiving the screw used for securing an item. As the dowel preferably is to be of relatively hard and compact material, a central boring will be suitable for avoiding splitting a wooden dowel. Also, use of a central boring corresponding to the core dimension of a wood screw enables establishing a well-defined strength in connection with screw and dowel. It may be preferred that between the screw and the dowel there is a lesser force for extraction than the force necessary for pulling the dowel out of the natural fibre board. By a possible overload, the board may be reused by using a larger screw. By dowels resisting a pull of 500 kg for extraction it may thus be advantageous that the central boring and the screw are designed so that the screw may be pulled out at a load of about 300 kg.

The invention will now be explained in more detail with reference to the accompanying drawing, where:
- Fig. 1: shows a plan view of a natural fibre board for use as door by using a fastener according to the invention,
- Figs. 2 and 3: shows a section through the natural fibre board in Fig. 1 according to the lines II-II and III-III, respectively,
- Fig. 4: shows a partial section through a fibre board with a blind hole for receiving a dowel,
- Fig. 5: shows a view corresponding to Fig. 4 with the dowel inserted in the hole,
- Fig. 6: shows a section through the dowel shown in fig. 5,
- Fig. 7: illustrates a partial perspective view of a door board with fastener according to the invention and with a milling in an edge strip for receiving a hinge fitting, and
- Fig. 8: shows a view for illustrating a bonding agent nozzle for use in the method according to the invention.

In the following, identical and corresponding elements will be designated with the same reference number. Therefore, no specific explanation will be given in connection with each single Figure.

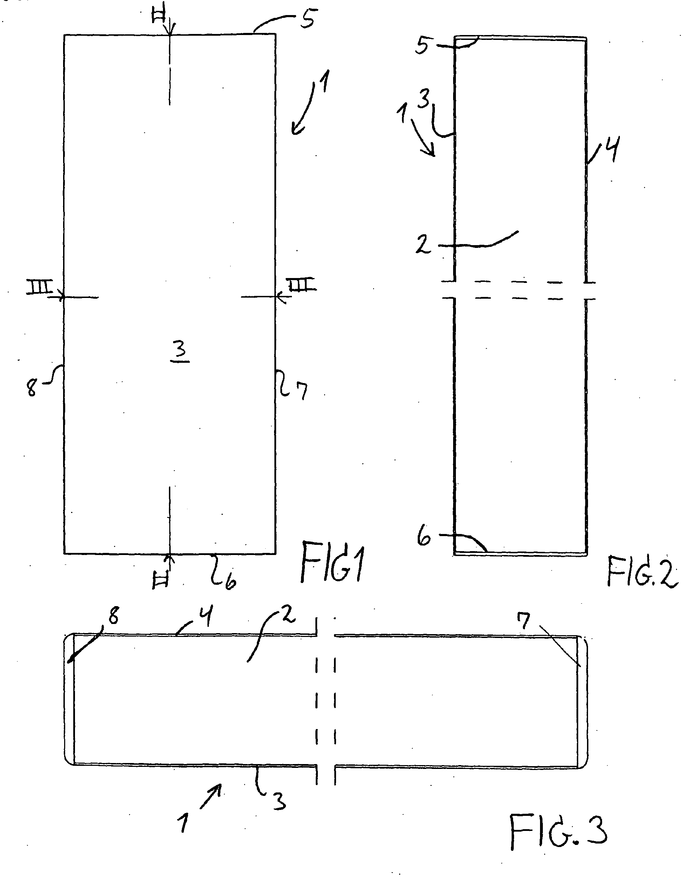

In Figs. 1 - 3 is seen a natural fibre board 1 intended to be used as door. The natural fibre board 1 comprises a central fibre board 2 which at two opposite faces are provided with a 0.5 mm veneer covering 3,4. At the side edge at bottom and top there is provided 1 mm solid wood edge strip 5,6, and at opposite side edges in the height of the board there are provided 3 mm solid wood edge strips 7,8.

The veneer sheet 2 is pressed and glued to a board with stable shape. The actual board has a thickness of 38 mm and has a density between 440 and 470 kg/m³. It has a bending strength of 6-7 N/mm² and a tensile strength of 0.14-0.16 N/mm².

The veneer sheet typically has a moisture content of 7-10%. The fibre board 2 is made of flax fibres.

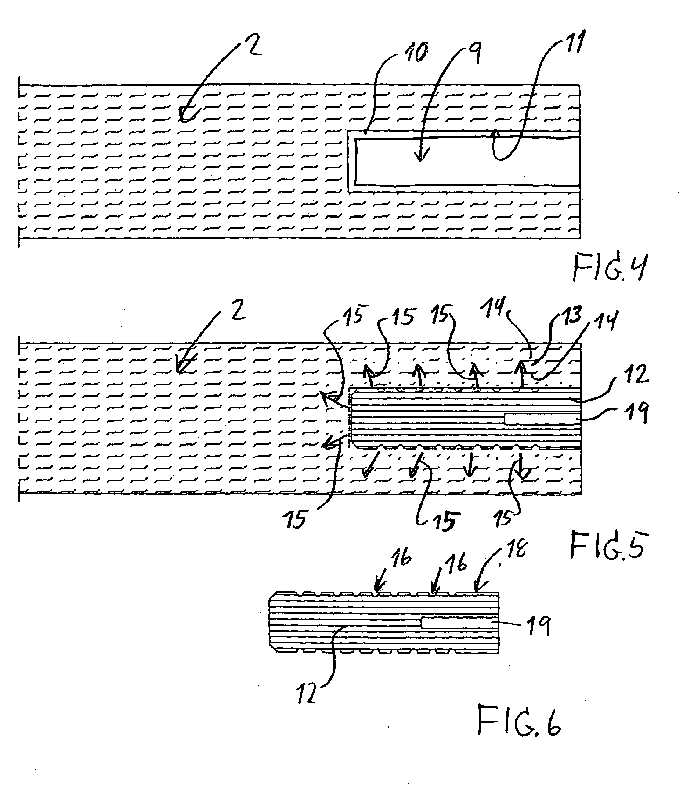

Fig. 4 illustrates a fibre board without veneer sheets and edge strips. A single cylindrical blind hole 9 is illustrated in the fibre board 2. Inside the blind hole there is indicated an applied bonding agent layer 10 which largely covers the whole inner surface 11 of the hole 9.

Fig. 5 illustrates how a dowel 12 is inserted in the hole 10. Hereby, a part of the bonding agent 9 has penetrated out in the interspace indicated by 13 between the fibres indicated as 14 in the fibre board 2. The extraction is indicated by the arrows 15. As it clearly appears from Fig. 6, the dowel has nine annular grooves 16 that each has a semicircular cross-section. These grooves will be filled with a bonding agent as well as the boundary surface or the slot 17 between the outer side 18 of the dowel 12 and the inner side of the hole 9 are also filled with a bonding agent joint.

The dowel comprises a central boring 19 for receiving a screw.

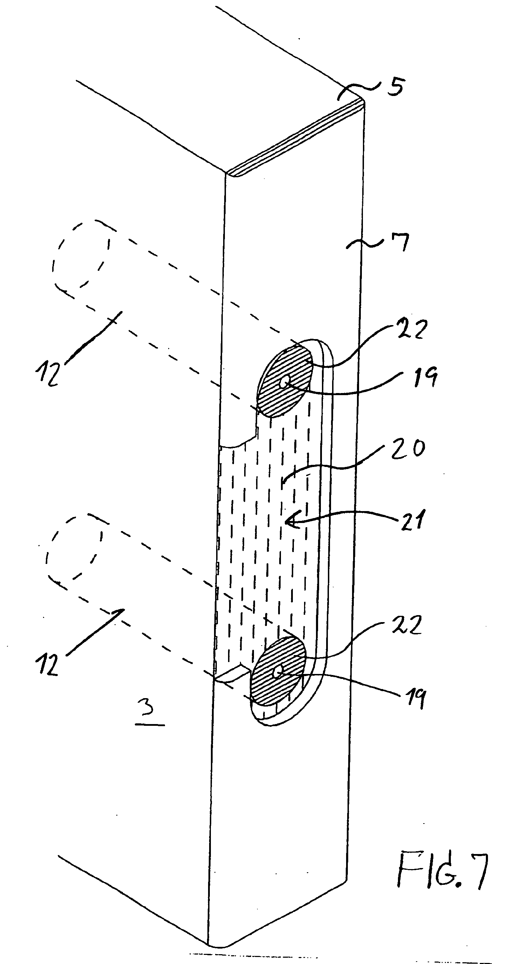

Fig. 7 is a schematic view of the door shown in Figs. 1 - 3 in which a dowel is mounted in a hole as explained with reference to Figs. 4 - 6. It appears that two dowels intended for receiving a hinge fitting (not shown) are provided. In the edge strip 7 there is provided a recess 20 with a configuration corresponding to the configuration of the plate section of the hinge. The recess 20 has a bottom 21 which will be flush with the upper side 22 on the dowels 12. Hereby is established a plane contact surface for the plate section of the hinge.

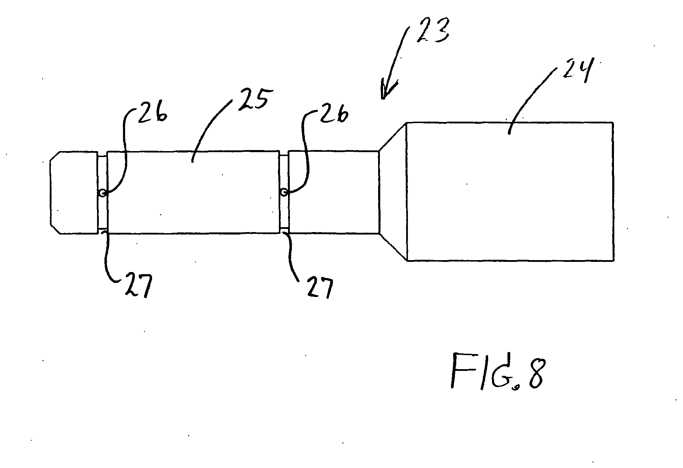

Fig. 8 illustrates a nozzle 23 used by the method according to the invention. The nozzle 23 has a handle part 24 which is connected with a (not shown) container for bonding agent. The bonding agent may, for example, be pressurised for being advanced to the nozzle 23. The nozzle furthermore comprises an insertion part 25 for placing in the hole 9. The nozzle comprises two outlet openings 26 which are provided in each their cylindrical groove 27. Alternatively, there may be provided several openings for establishing as even distribution of the bonding agent layer 10 in the hole 9 as possible. When the nozzle 23 has been inserted into the hole 9, a pump is activated for discharging a well-defined amount of bonding agent which is determined from the actual density of the board.

The bonding agent used is a polyvinyl acetate glue with a viscosity of about 15,000 mPa*s. After the glue has been applied to the hole, the nozzle 23 and the dowel 12 may be pressed into the hole provided with bonding agent. The bonding agent will then set at room temperature. In the same process line it is possible to attach hinges and lock cases before a door is put on stock as tensile strengths will not arise in hinges or lock cases. Alternatively, hinges and lock cases can be mounted at a later time after the setting of the bonding agent while the door board is stored before delivery.

## Claims

1. A method of mounting a fastening device for a screw for securing another item in a blind hole in a fibre board comprising fibres of wood, flax, straw or the like, which are compressed and bonded together to a board (1) having a stable shape and being provided with a coating on its surfaces, **characterised in that** the hole (9) is bored into the fibre board (1), that a dowel (12) with dimension corresponding to the blind hole is provided and with a number of grooves(16) extending along the periphery and with a central boring (19) for receiving the screw, that a fluid bonding agent is filled into the hole (9), that the dowel (12) is pressed into the hole (9) **in that** the bonding agent hereby is pressed out into the surrounding natural fibre mass (2) and fills up the boundary surface (10) between the dowel (12) and the hole (9), and that the bonding agent is set.

2. A method according to claim 1, **characterised in that** the coating comprises film or veneer, and that herein there is provided a recess (20) with a profile corresponding to the shape of the plate section, and that the upper side of the dowel (22) is flush with the bottom (21) of the recess (20).

3. A method according to claim 1 or 2, **characterised in that** the dowel (12) is cylindric, that the grooves (16) are formed in a plane perpendicular to the longitudinal direction of the dowel and has an approximately semicircular cross-section.

4. A method according to claim 3, **characterised in that** the grooves (16) constitute between ½ and 1/4, preferably about 1/3 of the surface of the dowel.

5. A method according to any preceding claim, **characterised in that** the bonding agent is a polyvinyl acetate dispersion type and has a viscosity between 10,000 and 20,000, preferably about 15,000 mPa*s.

6. A method according to any preceding claim, **characterised in that** the fibre board (1) comprises flax fibres and has a density of between 350 and 500, preferably between 440 and 470 kg/m³.

7. A method according to any preceding claim for fastening door hinges at the side edge of a board, **characterised in that** the fibre board (1) is a 38 mm thick flax board with a density of 440-470 kg/m³, that the dowel (12) is a 60 mm long wooden dowel with a diameter of 16 mm, that 9 annular grooves (16) are provided with a semicircular cross-section with radius 1 mm, and that the bonding agent is a polyvinyl acetate glue forming a glue joint which meets the standard EN 204 D3.

8. A method according to claim 1 or 5, **characterised in that** the bonding agent is filled into the hole (9) by using a nozzle (23) having plural openings (26) distributed over the length of the nozzle.

9. A method according to claim 1, 5 or 8, **characterised in that** the setting occurs at room temperature and during subsequent storage and transport of the fibre board (1) from a process line where the bonding agent and the dowel (12) are placed.

10. A pre-fabricated fibre board comprising a fastener which is ready to receive a screw for fastening an item on the fibre board said fibre board (1) comprising fibres of wood, flax, straw or the like, which are compressed and bonded together to a board having a stable shape and being provided with a coating on its surfaces, **characterised in that** a hole (9) is bored into the fibre board (1), that a dowel (12) with dimension corresponding to the blind hole (9) is provided and with a number of grooves (16) extending along the periphery and with a central boring (19) for receiving the screw, that a fluid bonding agent is filled into the hole (9), that the dowel (12) is pressed into the hole (9) **in that** the bonding agent hereby is pressed out into the surrounding natural fibre mass (2) and fills up the boundary surface (10) between the dowel (12) and the hole (9), and that the bonding agent is set.

11. Use of the pre-fabricated fibre board defined in claim 10 for mounting a screw for securing another item, such as a plate section for a hinge, a lock case or the like in a blind hole (9) in a fibre board (1) comprising fibres of wood, flax, straw or the like, which are compressed and bonded together to a board which has a stable shape and which is provided with a coating on its surfaces, **characterised in that** a hole (9) is bored in the fibre board (1), that a dowel (12) is with dimension corresponding to the blind hole (9) is provided and with a number of grooves (16) extend-ing along the periphery and with a central boring (19) for receiving the screw, that a fluid bonding agent is filled into the hole (9), that the dowel (12) is pressed into the hole (9) **in that** the bonding agent hereby is pressed out into the surrounding natural fibre mass (2) and fills up the boundary surface (10) between the dowel (12) and the hole (9), that the bonding agent is set, and that the screw is mounted hereafter.

## Patentansprüche

1. Verfahren zum Anbringen einer Befestigungsvorrichtung für eine Schraube, um ein weiteres Element in einem Sackloch in einer Faserplatte, die Fasern aus Holz, Flachs, Stroh oder dergleichen enthält, die zu einer Platte (1) komprimiert und zu einer stabilen Form verbunden sind, die auf ihren Oberflächen eine Beschichtung aufweist, **dadurch gekennzeichnet, dass** das Loch (9) in die Faserplatte (1) gebohrt wird, dass ein Dübel (12) mit Abmessungen, die dem Sackloch entsprechen, vorgesehen wird, wobei sich längs des Umfangs zahlreiche Nuten (16) erstrecken und eine Mittelbohrung (19) für die Aufnahme der Schraube vorgesehen ist, dass ein Fluid-Haftmittel in das Loch (9) gefüllt wird, dass der Dübel (12) in das Loch (9) gepresst wird, so dass das Haftmittel hierdurch nach außen in die umgebende Naturfasermasse (2) gepresst wird und die Grenzfläche (10) zwischen dem Dübel (12) und dem Loch (9) auffüllt, und dass das Haftmittel aushärtet.

2. Verfahren nach Anspruch 1, **dadurch gekennzeichnet, dass** die Beschichtung eine dünne Schicht oder ein Furnier umfasst und dass darin eine Aussparung (20) mit einem der Form des Plattenquerschnitts entsprechenden Profil vorgesehen ist und dass die Oberseite des Dübels (22) mit dem Boden (21) der Aussparung (20) bündig ist.

3. Verfahren nach Anspruch 1 oder 2, **dadurch gekennzeichnet, dass** der Dübel (12) zylindrisch ist und dass die Nuten (16) in einer Ebene senkrecht zur Längsrichtung des Dübels ausgebildet sind und einen angenähert halbkreisförmigen Querschnitt haben.

4. Verfahren nach Anspruch 3, **dadurch gekennzeichnet, dass** die Nuten (16) einen Anteil der Oberfläche des Dübels, der im Bereich von ½ bis ¼ liegt und vorzugsweise etwa 1/3 beträgt, bilden.

5. Verfahren nach einem vorhergehenden Anspruch, **dadurch gekennzeichnet, dass** das Haftmittel vom Polyvinylacetat-Dispersionstyp ist und eine Viskosität im Bereich von 10000 bis 20000 und vorzugsweise etwa 15000 MPa*s hat.

6. Verfahren nach einem vorhergehenden Anspruch, **dadurch gekennzeichnet, dass** die Faserplatte (1) Flachsfasern umfasst und eine Dichte im Bereich von 350 bis 500, vorzugsweise im Bereich von 440 bis 470 kg/m³ hat.

7. Verfahren nach einem vorhergehenden Anspruch zum Befestigen von Türscharnieren an der Seitenkante einer Platte, **dadurch gekennzeichnet, dass** die Faserplatte (1) eine Flachsplatte mit einer Dicke von 38 mm und mit einer Dichte von 440-470 kg/m³ ist, dass der Dübel (12) ein 60 mm langer Holzdübel mit einem Durchmesser von 16 mm ist, dass neun ringförmige Nuten (16) mit halbkreisförmigem Querschnitt und einem Radius von 1 mm vorgesehen sind und dass das Haftmittel ein Polyvinylacetat-Klebstoff ist, der eine Klebfuge bildet, die die Norm EN 204 D3 erfüllt.

8. Verfahren nach Anspruch 1 oder 5, **dadurch gekennzeichnet, dass** das Haftmittel in das Loch (9) unter Verwendung einer Düse (23) mit mehreren über die Länge der Düse verteilten Öffnungen (26) gefüllt wird.

9. Verfahren nach Anspruch 1, 5 oder 8, **dadurch gekennzeichnet, dass** die Härtung bei Raumtemperatur und während der anschließenden Lagerung und des anschließenden Transports der Faserplatte (1) von einer Prozesslinie, in der das Haftmittel und der Dübel (12) angebracht werden, erfolgt.

10. Vorgefertigte Faserplatte, die eine Befestigungseinrichtung umfasst, die für die Aufnahme einer Schraube zum Befestigen eines Elements an der Faserplatte bereit ist, wobei die Faserplatte (1) Fasern aus Holz, Flachs, Stroh oder dergleichen enthält, die zu einer Platte (1) mit einer stabilen Form komprimiert und verbunden sind, wobei die Platte auf ihren Oberflächen mit einer Beschichtung versehen ist, **dadurch gekennzeichnet, dass** in die Faserplatte (1) ein Loch (9) gebohrt ist, dass ein Dübel (12) mit Abmessungen, die dem Sackloch (9) entsprechen, vorgesehen ist, wobei längs des Umfangs zahlreiche Nuten (16) verlaufen und eine Mittelbohrung (19) für die Aufnahme der Schraube vorgesehen ist, dass ein Fluid-Haftmittel in das Loch (9) gefüllt ist, dass der Dübel (12) in das Loch (9) gepresst ist, wodurch das Haftmittel nach außen in die umgebende Naturfasermasse (2) gepresst wird und die Grenzfläche (10) zwischen den Dübel (12) und dem Loch (9) auffüllt, und dass das Haftmittel ausgehärtet ist.

11. Verwendung der vorgefertigten Faserplatte nach Anspruch 10 für die Anbringung einer Schraube zum Befestigen eines weiteren Elements wie etwa eines Plattenabschnitts für ein Scharnier, eines Schlossgehäuses oder dergleichen in einem Sackloch (9) in einer Faserplatte (1), die Fasern aus Holz, Flachs, Stroh oder dergleichen enthält, die zu einer Platte komprimiert und verbunden sind, die eine stabile Form hat und auf ihren Oberflächen mit einer Beschichtung versehen ist, **dadurch gekennzeichnet, dass** in die Faserplatte (1) ein Loch (9) gebohrt wird, dass ein Dübel (12) mit Abmessungen, die dem Sackloch (9) entsprechen, vorgesehen wird, wobei längs des Umfangs zahlreiche Nuten (16) verlaufen und eine Mittelbohrung (19) für die Aufnahme der Schraube vorgesehen ist, dass ein Fluid-Haftmittel in das Loch (9) gefüllt wird, dass der Dübel (12) in das Loch (9) gepresst wird, wodurch das Haftmittel nach außen in die umgebende Naturfasermasse (2) gepresst wird und die Grenzfläche (10) zwischen dem Dübel (12) und dem Loch (9) auffüllt, dass das Haftmittel aushärtet und dass anschließend die Schraube angebracht wird.

## Revendications

1. Procédé pour monter un dispositif de fixation pour une vis pour immobiliser un autre article dans un trou borgne dans un panneau de fibres comprenant des fibres de bois, de lin, de paille ou d'autres analogues, qui sont comprimées et collées ensemble pour former un panneau (1) présentant une forme stable et muni d'un revêtement sur ses surfaces, **caractérisé en ce que** le trou (9) est percé dans le panneau de fibres (1), **en ce qu'**un goujon (12) dont la dimension correspondant au trou borgne est prévu, et avec un certain nombre de rainures (16) s'étendant le long de la périphérie et avec un alésage central (19) pour recevoir la vis, **en ce que** le trou (9) est rempli avec un liant fluide, **en ce que** le goujon (12) est pressé dans le trou (9), le liant étant ainsi sorti par pression dans la masse de fibres naturelles environnante (2) et remplissant la surface de délimitation (10) entre le goujon (12) et le trou (9) et **en ce que** le liant est durci.

2. Procédé selon la revendication 1, **caractérisé en ce que** le revêtement comprend un film ou un placage et **en ce qu'**il est prévu dans celui-ci un évidement (20) avec un profil correspondant à la forme de la section de la plaque, et **en ce que** le côté supérieur du goujon (22) est aligné sur le fond (21) de l'évidement (20).

3. Procédé selon la revendication 1 ou 2, **caractérisé en ce que** le goujon (12) est cylindrique, **en ce que** les rainures (16) sont formées dans un plan perpendiculaire à la direction longitudinale du goujon et a une section transversale approximativement semi-circulaire.

4. Procédé selon la revendication 3, **caractérisé en ce que** les rainures (16) représentent entre ½ et ¼, de préférence, environ 1/3 de la surface du goujon.

5. Procédé selon l'une quelconque des revendications précédentes, **caractérisé en ce que** le liant est du type dispersion d'acétate de polyvinyle et a une viscosité comprise entre 10.000 mPa*s et 20.000 mPa*s, de préférence, d'environ 15.000 mPa*s.

6. Procédé selon l'une quelconque des revendications précédentes, **caractérisé en ce que** le panneau de fibres (1) comprend des fibres de lin et a une densité comprise entre 350 kg/m³ et 500 kg/m³, de préférence, entre 440 kg/m³ et 470 kg/m³.

7. Procédé selon l'une quelconque des revendications précédentes pour fixer des charnières de porte sur le bord latéral d'un panneau, **caractérisé en ce que** le panneau de fibres (1) est un panneau de fibres de lin de 38 mm d'épaisseur avec une densité comprise entre 440 kg/m³ et 470 kg/m³, **en ce que** le goujon (12) est un goujon en bois de 60 mm de long avec un diamètre de 16 mm, **en ce que** 9 rainures annulaires (16) présentent une section transversale semi-circulaire ayant un rayon de 1 mm, et **en ce que** le liant est une colle d'acétate de polyvinyle formant un joint de colle répondant à la norme EN 204 D3.

8. Procédé selon la revendication 1 ou 5, **caractérisé en ce que** le trou (9) est rempli avec le liant à l'aide d'une buse (23) comportant plusieurs ouvertures (26) réparties sur la longueur de la buse.

9. Procédé selon la revendication 1, 5 ou 8, **caractérisé en ce que** le durcissement se fait à température ambiante et pendant le stockage et le transport ultérieurs du panneau de fibres (1) à partir d'une ligne de traitement où le liant et le goujon (12) sont mis en place.

10. Panneau de fibres préfabriqué comprenant un dispositif de fixation qui est prêt à recevoir une vis pour fixer un article sur le panneau de fibres, ledit panneau de fibres (1) comprenant des fibres de bois, de lin, de paille ou d'autres analogues, qui sont comprimées et collées ensemble pour former un panneau (1) présentant une forme stable et muni d'un revêtement sur ses surfaces, **caractérisé en ce que** le trou (9) est percé dans le panneau de fibres (1), **en ce qu'**un goujon (12) dont la dimension correspondant au trou borgne est prévu, et avec un certain nombre de rainures (16) s'étendant le long de la périphérie et avec un alésage central (19) pour recevoir la vis, **en ce que** le trou (9) est rempli avec un liant fluide, **en ce que** le goujon (12) est pressé dans le trou (9), le liant étant ainsi sorti par pression dans la masse de fibres naturelles environnante (2) et remplissant la surface de délimitation (10) entre le goujon (12) et le trou (9) et **en ce que** le liant est durci.

11. Utilisation du panneau de fibres préfabriqué selon la revendication 10 pour monter une vis pour immobiliser un autre article, par exemple une section de plaque pour une charnière, un boîtier de serrure ou un article de ce genre, dans un trou borgne (9) dans un panneau de fibres (1) comprenant des fibres de bois, de lin, de paille ou d'autres analogues, qui sont comprimées et collées ensemble pour former un panneau qui présente une forme stable et qui est muni d'un revêtement sur ses surfaces, **caractérisée en ce qu'**un trou (9) est percé dans le panneau de fibres (1), **en ce qu'**il est prévu un goujon (12) avec une dimension correspondant au trou borgne (9), et avec un certain nombre de rainures (16) s'étendant le long de la périphérie et avec un alésage central (19) pour recevoir la vis, **en ce que** le trou (9) est rempli avec un liant fluide, **en ce que** le goujon (12) est pressé dans le trou (9), le liant étant ainsi sorti par pression dans la masse de fibres naturelles environnante (2) et remplissant la surface de délimitation (10) entre le goujon (12) et le trou (9), **en ce que** le liant est durci et **en ce que**, ensuite, la vis est montée.
